# EUROPÄISCHE PATENTSCHRIFT

(11) **EP 2 186 685 B1**
(45) Veröffentlichungstag und Bekanntmachung des Hinweises auf die Patenterteilung: **31.08.2011**
(21) Anmeldenummer: 09009586.0
(22) Anmeldetag: 23.07.2009
(51) Int. Cl.: B60R 13/10, G09F 7/18

(54) **Schrifttafel mit Kantenschutz**
Writing tablet with edge protection
Tableau d'écriture doté d'une protection des bords

(30) Priorität: 25.07.2008 DE 102008034623
(43) Veröffentlichungstag der Anmeldung: 19.05.2010
(73) Patentinhaber: Lachermund, Wolfgang, 97944 Boxberg (DE)
(72) Erfinder: Lachermund, Wolfgang, 97944 Boxberg (DE)
(74) Vertreter: Pöhner, Wilfried Anton

(56) Entgegenhaltungen:
- DE-U1- 8 702 654
- US-A- 4 038 770

## Beschreibung

Die Erfindung bezieht sich auf eine Schrifttafel mit Kantenschutz zur Montage auf einer Fläche, bestehend aus einer Blechplatte, auf deren Vorderseite Schriftzeichen und/oder Zahlen und/oder Graphiken aufgebracht oder eingeprägt sind und in die nahe zu ihrer Kante ein zumindest teilweise umlaufender Wulst eingeprägt ist und einer Leiste, die die Kante der Blechplatte zumindest teilweise umschließt, gemäß Oberbegriff des Anspruches 1.

Schrimafeln mit aufgebrachten Schriftzeichen. Zahlen oder anderen Graphiken sind seit langem im Gebrauch. Für besondere Betastungen ist es sinnvoll, die Schrifttafel aus Blech herzustellen, dass bedrukt lackiert oder geprägt werden kann. Im letzten Fall stehen die Zeichen und Symbole reliefartig aus der Blechfläche heraus. Denkbar sind auch Einkerbungen.

Derartige Schrifttafeln sind insbesondere für die Kennzeichnung von Kraftfahrzeugen millionenfach verbreitet. Dabei sind die verschiedensten Formen bekannt, jedoch sind die weitaus meisten Schilder als längliches Rechteck geformt.

Ein Nachteil dieser Blechplatten sind ihre mitunter recht scharfen kanten. Durch andauernde Vibrationen der Blechtafel kann die Kante des Schildes auf die Karosserie des Fahrzeuges stoßen und dabei die Lackierung der Fläche beschädigen, auf der das Schild montiert ist. Weil unter dem Lack in den weitaus meisten Fällen dadurch das Stahlblech des Fahrzeuges freigelegt wird, bildet sich an dieser Stelle Rost, was auf die Dauer zur Bildung von Roststellen bis hin zu Durchrostungen führen kann.

Scharfe Kanten verursachen ein weiteres Problem beim Aufprall einer Person auf das Fahrzeug. Zusätzlich zu den Verletzungen aus dem Zusammenstoß mit dem Fahrzeug erleidet die aufprallende Person dann auch noch Schnittverletzungen durch die scharfe Kante der Schrifttafel.

Deshalb ist es in zahlreichen Staaten vorgeschrieben, dass die Schrifitafel für das Kfz-Kennzeichen eine abgerundete Kante aufweisen muss, die bestimmte Rundungsradien nicht unterschreiten darf. Diese beiden Probleme erfordern, dass auf die Kante der Schrifttafel ein Kantenschutz aufgebracht wird.

Eine weitere Nutzung dieses Kantenschutzes ist oft das Aufdrucken von Werbebotschaften, z. B. von Kfz-Händlern, Kfz-Werkstätten oder dem Halter des Fahrzeuges. Auf aktuellem Stand der Technik werden als Kantenschutz Kunststoffteile eingesetzt. Die Elastizität des Materials verhindert zuverlässig Beschädigungen am Lack auf der Montagefläche und reduziert das Verletzungsrisiko beim Aufprall von Personen.

Das Gebrauchsmuster DE 20 2004 019 978 beschreibt einen Rahmen für eine Schrifttafel an Kfz, der aus drei Teilen besteht, die durch ein sogenanntes "Filmscharnier" miteinander verbunden und gegeneinander verschwenkbar sind. Das Mittelteil ist eine Platte, die etwas größer als die einzurahmende Schrifttafel ist. An zwei gegenüberliegenden Kanten ist jeweils eine Hälfte des Rahmens, der nach vorne sichtbar ist, über je ein Filmscharnier gelenkig angebunden. Diese beiden Rahmenhälften können um 180 Grad verschwenkt werden, bis sie auf dem Mittelteil aufliegen, wo sie durch Zapfen fest einrasten und so eine Tasche bilden, die die Kanten der Schrifttafel allseits umschließt, aber in der Mitte eine sehr große Öffnung frei lässt, durch die die gesamte, beschriftete Fläche der Schrifttafel sichtbar ist.

Ein Vorteil ist, dass das Mittelteil zum Anschrauben an das Fahrzeug genutzt werden kann. Die Schrauben werden durch die eingelegte Schrifttafel überdeckt, die dann wiederum mit den klappbaren Rahmenhälften am Mittelteil fixiert wird.

Im Mittelteil sind zahlreiche Bohrungen und Langlöcher eingebracht, durch welche je eine Schraube in die von den Kfz-Herstellern in die Montagefläche eingebrachten Gewindeeinsätze eingedreht werden kann.

Ein wesentlicher Nachteil dieser Rahmen ist ihre relativ voluminöse Bauform. Zusammen mit den ausgeklappten Rahmenhälften beansprucht der Rahmen eine Fläche, die mehr als doppelt so groß wie die zu rahmende Schrifttafel ist. Entsprechend groß ist der Flächenund Volumenbedarf beim Transport und bei der Lagerung und entsprechend aufwändig ist insbesondere die Form zur Herstellung dieses Kunststoffteils.

Ein anderer, noch gewichtigerer Nachteil ist der relativ hohe Materialverbrauch. Ein typisches Beispiel ist ein Rahmen für deutsche Kfz-Kennzeichen mit einem Gewicht von ca. 200 Gramm. Dementsprechend hoch sind die Materialkosten. Weitere Steigerungen sind durch die kostensteigerungen des Ausgangsmaterials Erdöl sicher.

Aus der die Gattung bildenden DE 87 02654 U1 ist es bereits bekannt, Leisten mit Werbeaufschriften von der Unterseite her an Kraftfahrzeugkennzeichen anzuklipsen, wobei eine Einrastverbindung mit einer am unteren Rand des Kennzeichens befindlichen Wulst vorgenommen wird. Diese Werbeleiste ist nicht dazu bestimmt, mit ihrer Rückseite an einer Fläche anzuliegen oder gar zur Befestigung genutzt zu werden. Durch den Einrastmechanismus einfachster Art an der Unterkante des KFZ-Kennzeichens wird eine unzureichend belastbare, unverlässliche Verbindung hergestellt.

Auf diesem Hintergrund hat sich die Erfindung die Aufgabe gestellt, einen Kantenschutz zu entwickeln, der die am weitesten heraüsragende Kante einer Schrifttafel schützt, jedoch erheblich leichter und kompakte ist als bisher.

Als Lösung präsentiert die Erfindung, dass am Rand der Rückseite der Leiste mehrere rippenartige Haltestreifen angeformt sind, die auf der zum Zentrum der Blechplatte weisenden Flanke des Wulstes auftiegeln.

Die erfindungsgemäße Kantenschutzleiste beschränkt sich-also auf den Schmutz einer einzigen Kante der Schrifttafel. Deshalb dient sie auch nicht als deren Befestigung. Vielmehr wird die Schrifttafel mit zwei Bohrungen versehen. Durch die Bohrungen werden die Befestigungsschrauben zu den Gewindeansätzen in der Montagefläche geführt.

Als Kantenschutz dient gemäß der Erfindung nur eine einzige Leiste, die sehr viel weniger Raum als ein vollständiger Rahmen beansprucht und eine dramatische Einsparung an Material ermöglicht. Für ein typisches deutsches Kfz-Kennzeichen wiegt eine erfindungsgemäße Leiste zum Schutz einer Längskarite nur noch ca. 30 Gramm also nur noch 15 % im Vergleich zu dem zuvor geschilderten Stand der Technik.

An dem Rand der Rückseite der Leiste sind mehrere rippenartige Haltestreifen angeformt. Sie gleiten bei der Montage der Schrifttafel über den äußeren Bereich des Wulstes auf seine zum Zentrum des Schildes weisende Flanke. Parallel dazu gleitet auf der anderen Seite der Schrifttafel die - abgespreizte - Halteklammer entlang, bis sie in den Wulst einrastet. Zwischen den Haltestreifen und der Halteklammer bilden sich also jeweils stets zwei Auflagepunkte mit Kontakt zur Schrifttafel und zur Leiste. Dadurch kann die Leiste relativ einfach und mit nur geringem Widerstand aufgeschoben werden.

Da die Haltestreifen außerhalb der Profilmitte angeordnet sind, lässt sich die Leiste besonders dann einfach aufschieben, wenn sie zuvor um ca. 45 Grad gegenüber der Schrifttafel verschwenkt wird.

Nach dem Aufschieben muss - gegensinnig zur ersten Verschwenkung - die Leiste um eine im Wulst verlaufende Schwenkachse so weit verschwenkt werden, dass sie parallel zur Fläche der Schrifttafel ausgerichtet ist. In dieser Position bildet sich über die Haltestreifen und die Halteklammern eine feste und belastbare Verbindung zwischen Leiste und Schrifttafel aus. Diese Verbindung ist so hoch belastbar, dass die Leiste auch bei Fahrten durch Schlaglöcher nicht von der Schrifttafel abfällt.

Dazu muss das Verschwenken der Leiste zurück in ihre Aufschiebestellung durch Abstützungen verhindert wird, die an den zu den Haltestreifen gegenüberliegenden Rand der Leiste angeformt sind. Im montierten Zustand der Leiste liegen sie - ebenso wie die Auflagefläche jeder Halteklammer - auf der Montagefläche auf. Der wichtigste Vorteil der erfindungsgemäßen Leiste für den Kantenschutz ist ihr sehr geringes Gewicht, woraus sich auch ein sehr attraktiver Marktpreis ergibt.

Ein weiterer Vorteil ist die einfache Montage: Falls das Nummernschild des Kfz auf einer ebenen Fläche montiert worden ist, kann die Leiste nachträglich einfach aufgeklipst werden. Wenn sie gemeinsam mit der Schrifttafel an das Fahrzeug geschraubt wird, so wird erst die Schrifttafel locker angeschraubt und danach die Leiste auf die Kante aufgeschoben und erst dann die Schrifttafel endgültig festgezogen, wodurch die zuvor beschriebene gegensinnige Schwenkbewegung der Leiste eingeleitet und dann durch die Abstützungen auf Dauer blockiert wird.

So ist sichergestellt, dass der zuvor erwähnte dritte Auflagepunkt stets stabil bleibt.

Falls die Haltekraft mit einigen über die Länge der Leiste verteilten Haltestreifen, Klemmflächen und Abstützungen nicht ausreicht, schlägt die Erfindung vor, dass die genannten Befestigungselemente soweit verlängert werden, bis sie ineinander übergehen. Mit nur sehr geringem Mehraufwand an Material wird auf diese Weise eine deutliche Erhöhung der maximalen Belastbarkeit der Befestigung für die erfindungsgemäße Leiste erreicht.

Zahlreiche Fahrzeuge bieten ebene Flächen zur Montage der Kennzeichen an, bei PKW insbesondere am Heck. Meist an der Vorderfront sind die Montagefläche jedoch uneben, wie z. B. auf dem Stoßfänger. An diesem Ort und an vielen anderen Teilen der Fahrzeugvorderfront werden oft konvexe, also nach außen gewölbte Flächen, für die Anbringung des Kfz-Kennzeichens zu nutzen sein. In diesen Fällen reicht die für ebene Flächen ausreichend lange Abstützung nicht mehr, sondern muss verlängert werden. Dabei hängt es vom Maß der Krümmung der Fläche ab, welche Länge der Abstützung erforderlich ist.

Um nicht für jeden Kfz-Typ eine andere Version der Leiste fertigen zu müssen, schlägt die Erfindung vor, dass die Abstützung grundsätzlich sehr lang ist, sodass sie auch für sehr stark gewölbte Flächen nutzbar ist. Zur einfachen Anpassung an geringer gekrümmte Flächen weist die Abstützung über ihre Länge hinweg Sollbruchstellen oder Einschnürungen auf, an denen der nicht benötigte Teil der Abstützung abgebrochen oder abgetrennt werden kann, sodass sich die Abstützung auf die im Einzelfall passende Länge verkürzt.

Es kann jedoch auch Montageorte geben, wie z. B. auf einem Stoßfänger, bei denen die Unterkante der Schrifttafel ohne eine entsprechende Auflage über die Shilouette der Fahrzeugfront hinausragt. In diesen Fällen würde der Auflagepunkt für die Abstützung fehlen und die erfindungsgemäße Leiste - z. B. beim Durchfahren eines Schlagloches - verschwenkt werden und sich dadurch von der Schrifttafel lösen.

In diesen Fällen wird als zusätzliche Absicherung der Leiste ihre Verbindung mit denjenigen Schrauben erforderlich, die die Schrifttafel halten.

Dazu schlägt die Erfindung vor, dass an die Rückseite der Leiste wenigstens zwei Lochstreifen mit jeweils einem Ende angeformt sind. Diese beiden Lochstreifen verlaufen zwischen der Blechplatte und der Fläche, auf der die Blechplatte montiert ist. Die Lochstreifen enthalten zahlreiche aneinander gereihte Löcher, sodass eines dieser Löcher zu den Serienmäßigen Befestigungspunkten passt. Durch die jeweils passende Bohrung aus dieser Reihe wird die Schraube hindurchgeführt, die auf der einen Seite die Blechplatte hält und auf der anderen Seite in die Montagefläche hinein gedreht wird.

Für die Befestigung dieser Lochstreifen schlägt die Erfindung verschiedene Ausführungsformen vor. In einem sehr einfachen Fall sind die Lochstreifen etwa rechtwinklig zur Leiste ausgerichtet. Die einstückige Baugruppe, bestehend aus der Leiste und den seitlich herausragenden beiden Lochstreifen hat also die Form eines C.

Die Einschränkung dieser Variante sind die höchst unterschiedlichen Anbringungsorte für die Befestigungen bei den einzelnen Kfz-Herstellern. Häufig werden nur zwei Befestigungen angeboten, die auf der horizontalen Mittellinie des Kennzeichens anzuordnen sind Es sind jedoch auch vier Befestigungspunkte üblich, die dann Bohrungen in den Ecken der Schrifttafel erfordern. Der Nachteil der unbeweglich an die Leiste angegossenen, seitlich herausstehenden Lochleisten ist ihre Anpassung an die überaus zahlreichen Unterschiede in den Abständen der Befestigungspunkte und ihrer Anzahl.

Ein weiterer Nachteil ist, dass das nunmehr C-förmige Bauteil wider recht sperrig ist.

Um diesem Problem abzuhelfen, schlägt die Erfindung als weitere verfeinerte Ausführungsform vor, dass jeder Lochstreifen aus dauerhaft elastischem Material besteht und so an die Leiste angegossen wird, dass er vor seiner Montage etwa parallel zur Leiste verläuft und während der Montage soweit verbogen werden kann, dass ein Loch des Lochstreifens eine Bohrung in der Blechplatte erreicht. Mit einer großen Anzahl von Löchern im Lochstreifen und einer sehr großen Länge des Lochstreifens können die verschiedensten Lochmuster in der Montagefläche erreicht werden.

Falls eine möglichst universell einsetzbare Version geschaffen werden soll, so wird diese sinnvollerweise über vier Lochstreifen verfügen. Falls nur zwei Befestigungspunkte vorhanden sind, können die anderen beiden Lochstreifen vor der Montage abgekniffen werden.

Um die Anpassung an verschiedene Abstände der Befestigungspunkte noch einfacher und noch flexibler machen zu können, schlägt die Erfindung als eine weitere Ausführungsvariante vor, dass jeder Lochstreifen nur über eine Sollbruchstelle mit der Leiste verbunden ist. Vor der Montage werden die Lochstreifen von der Leiste abgetrennt und dann jeweils in eine von mehreren Aufnahmen auf der Rückseite der Leiste eingesteckt. Wenn die Leiste mit zahlreichen Aufnahmen bestückt ist bis hin zu einer Reihe von Aufnahme über die gesamte Länge der Leiste und wenn die Lochstreifen eine gewisse Elastizität aufweisen, ist die Anpassung an jeden beliebigen Lochabstand möglich. Auch bei vier Befestigungspunkten, die die Ecken eines Rechteckes markieren, reichen zwei Lochstreifen zur Montage aus.

Vorteile dieser Variante sind, dass die Leiste durch die angegossenen Lochstreifen in ihrem Ausgangszustand kaum vergrößert wird, also bei Formung, Lieferung und Lagerung nur unwesentlich mehr Platz beansprucht. Ein weiterer Vorteil ist, dass die Anpassung an sehr stark voneinander abweichende Befestigungspunkte mit einer einzigen Variante möglich ist, sofern eine ausreichende Anzahl von Aufnahmen vorhanden ist.

Ein sinnvolles Beispiel für die Gestaltung einer Aufnahme ist ein etwa C-förmiger Bügel auf der Rückseite der Leiste, der zusammen mit der Leiste eine Öffnung bildet, durch die ein Lochstreifen hindurch gesteckt und durch einen Anschlag oder eine Rastnase fixiert werden kann. In dieser Position fungiert die Lochleiste dann nicht nur wie ein Zugseil, das die Leiste mit der Befestigungsschraube verbindet, sondern sorgt zusätzlich auch noch dafür, dass sich die Leiste bei Erschütterungen nicht ungewollt verschwenkt, sodass die Befestigung über die erfindungsgemäßen Haltestreifen und Halteklammern auch dann noch möglich ist, wenn die - ebenfalls vorhandenen - Abstützungen die unebene Montagefläche nicht erreichen können.

Ein weiterer Vorteil dieser Ausführungsform ist also, dass mit einer einzigen Version die Befestigung sowohl auf unebenen, gewölbten Flächen wie auch auf ebenen Flächen möglich ist. Bei ebenen Flächen kann die zusätzliche Sicherung durch die Lochstreifen auf Wunsch als Zusatz genutzt werden,obwohl sie eigentlich wegfallen könnte; bei Befestigung auf gewölbten Flächen sichert sie die Leiste auch bei Stößen gegen ein Abfallen.

Als eine weitere Stabilisierung der Schriftplatte kann jeder Lochstreifen soweit verlängert werden, dass er bis zu der Kante der Btechptatte reicht, die der Leiste gegenüber liegt. An diesem Ende kann auf dem Lochstreifen ebenfalls wenigstens je ein Haltestreifen, eine Halteklammer und eine Abstützung angeformt werden, wie sie auf der Rückseite der Leiste bereits vorhanden sind. Damit kann auch die gegenüberliegende Kante des Kennzeichens zusätzlich gesichert werden.

Es ist sogar denkbar, dass diese Anordnung ohne die Schrifttafel auf die Fläche aufgeschraubt wird und erst dann die Schrifttafel - ohne das Einbringen von Bohrungen - zuerst in die Leiste eingesteckt wird und dann jeweils ein Lochstreifen so weit gereckt wird, dass sich die an seinem Ende befindlichen Haltestreifen und Halteklammern auf die Kante aufschieben lassen.

Dafür könnte der Lochleiste auch eine zusätzliche Federwirkung verliehen werden, in dem z. B. abwechselnd links und rechts kleine Kerben eingebracht werden, die eine ziehharmonikaförmige Dehnung des Lochstreifens ermöglichen.

Der entscheidende Vorteil der bisher geschilderten Leiste mit zusätzlichen Lochstreifen ist, dass ein solcher, erfindungsgemäßer Kanteschutz trotz universeller Anwendbarkeit gegenüber dem bisherigen Stand der Technik die benötigte Werkstoffmenge dramatisch vermindert und die Größe des Bauteils in mindestens ebenso großem Maße vermindert.

Zu beachten ist, dass bei dieser Variante die Gussform etwas komplexer wird.

Eine weniger aufwändige Forme einer Kantenschutzleiste, die auch auf sehr unebenen Flächen montiert werden kann, nutzt aus, dass zur Befestigung der Schrifttafel sowieso wenigstens zwei, oft jedoch auch vier, Bohrungen in die Blechplatte eingebracht werden müssen Eine Einrichtung zum Einbringen dieser Löcher, wie z. B. eine Bohrmaschine oder eine Stanze, ist also in jedem Fall vorhanden und betriebsbereit. Deshalb ist es nur ein sehr geringer Mehraufwand, wenn in die Blechtafel noch wenigstens eine weitere Bohrung eingebracht wird; nämlich in den Wulst, auf dem die Leiste aufgesetzt werden soll.

Im einfachsten Fall reicht eine einzige Bohrung in der Mitte der Blechplatte. Je nach Länge der Leiste können jedoch auch zwei oder mehr Bohrungen vorgesehen werden. In diese Bohrungen greift je ein Zapfen ein, der auf der Rückseite der Leiste gegenüber von einer Halteklammer angeformt ist. Dieser Zapfen rastet jeweils in eine Aussparung in der gegenüberliegenden Halteklammer ein, wenn diese auf den Zapfen aufgedrückt wird.

Eine sinnvolle Einrastung ist z. B. eine Einschnürung, die um den Zapfen herum verläuft, in welcher sich ein Wulst einklinkt, der an der Innenseite der Bohrung in der Halteklammer verläuft.

Durch diesen Zapfen wird verhindert, dass die Leiste sich gegenüber der Blechplatte verschwenkt, wenn die Abstützung durch Unebenheit der Montagefläche - wie z. B. an der Vorderseite eines Kfz - keine Auflagefläche findet. Der oder die Zapfen sorgen dann dafür, das die Leiste trotzdem in der gleichen Ebene wie die Blechplatte ausgerichtet ist.

Ein entscheidender Vorteil der letztgenannten Konfiguration mit vorzugsweise zwei Zapfen ist, dass sie universell für die Befestigung des Kantenschutzes sowohl auf einer ebenen Fläche als auch einer unebenen Fläche geeignet ist. Erst bei der Montage muss entschieden werden, ob sie auf einer ebenen Fläche montiert werden soll, also keine Bohrungen im Wulst der Blechplatte erforderlich sind, sondern stattdessen die Zapfen abgekniffen werden, z. B. mit einem Seitenschneider, oder ob die Leiste auf einer unebenen Fläche an die Blechplatte anmontiert werden soll, also zusätzliche Bohrungen im Wulst der Blechplatte erforderlich sind, die dann noch vor der Montage in den Wulst der Blechplatte an den Stellen eingebracht werden, wo sie zu den Zapfen korrespondieren.

Zur Montage wird die Leiste so weit auf den Wulst der Blechplatte aufgeschoben, bis die Zapfen auf der Leiste in die Bohrungen im Wulst der Blechplatte hineingleiten und auf der Rückseite wieder sichtbar werden. Eine Kegelform der Spitzen der Zapfen erleichtert das Einklinken in die Bohrungen. Dann werden alle Halteklammern der Leiste mit ihrer Aussparung auf den jeweils gegenüberliegenden Zapfen aufgedrückt, bis sie dort einrasten. Die übrigen Halteklammern sind bereits beim Hineinschieben der Zapfen in die korrespondierenden Bohrungen formschlüssig auf die Rückseite des Wulstes aufgedrückt. Die Leiste ist in dieser Position auch ohne die Auflage der Abstützungen auf einer Fläche stabil an der Blechplatte befestigt.

Bei der Montage auf einer ebenen Fläche können selbstverständlich trotzdem Bohrungen in der erforderlichen Anzahl in den Wulst eingebracht Werden und die Zapfen hindurchgeführt und auf der Rückseite mit der korrespondierenden Halteklammer verrastet werden. Dann ist die Leiste doppelt gesichert, nämlich zum einen durch die Abstützungen, die auf der ebenen Fläche aufliegen und zum anderen durch die Zapfen, weiche durch die zusätzlichen Bohrungen verlaufen. Falls die Bohrungen jedoch eingespart werden sollen, müssen zuvor die Zapfen entfernt werden.

Eine andere Alternative ist es, zwei Versionen zu schaffen: Eine erste Version zur Montage auf unebenen Flächen, die mit Zapfen ausgerüstet ist, für die dann Bohrungen in den Wülsten eingebracht werden müssen und eine zweite Version ohne Zapfen, die ausschließlich für ebene Flächen gedacht ist. Es ist abzuwägen, ob der Vorteil einer einzigen Standardversion den Mehraufwand des Einbringens von ein oder zwei Bohrungen in den Wulst bzw. das Abknipsen der für ebene Montageflächen nicht benötigten Zapfen kompensiert oderob die Produktion, Logistik und Bereitstellung von einer zweiten Variante im Gesamten doch einfacher sein wird. Bei der Anwendung als Nummernschildleiste für Kfz wird dann meist die Variante mit Zapfen für die Vorderseite genutzt und die Variante ohne Zapfen für die Rückseite des Fahrzeuges.

Im Folgenden sollen weitere Einzelheiten und Merkmale der Erfindung anhand eines Beispiels erläutert werden. Dieses soll die Erfindung jedoch nicht einschränken, sondern nur erläutern. Es zeigt in schematischer Darstellung:
- Figur 1:: Schnitt durch Blechplatte mit Leiste auf ebener Fläche
- Figur 2:: Schmalseite der Leiste auf Blechplatte und Ebene
- Figur 3:: Vorderansicht der Blechplatte mit Wulst und auf- geschobener Leiste
- Figur 4:: Detail des Schnittes aus Figur1 durch die Leiste mit eingeschobenem Wulst der Blechplatte
- Figur 5:: Detail des Schrägbildes der Leiste von der Rückseite
- Figur 6:: Schrägbild der gesamten Leiste von der Rückseite her

### Die Figuren zeigen im Einzelnen:

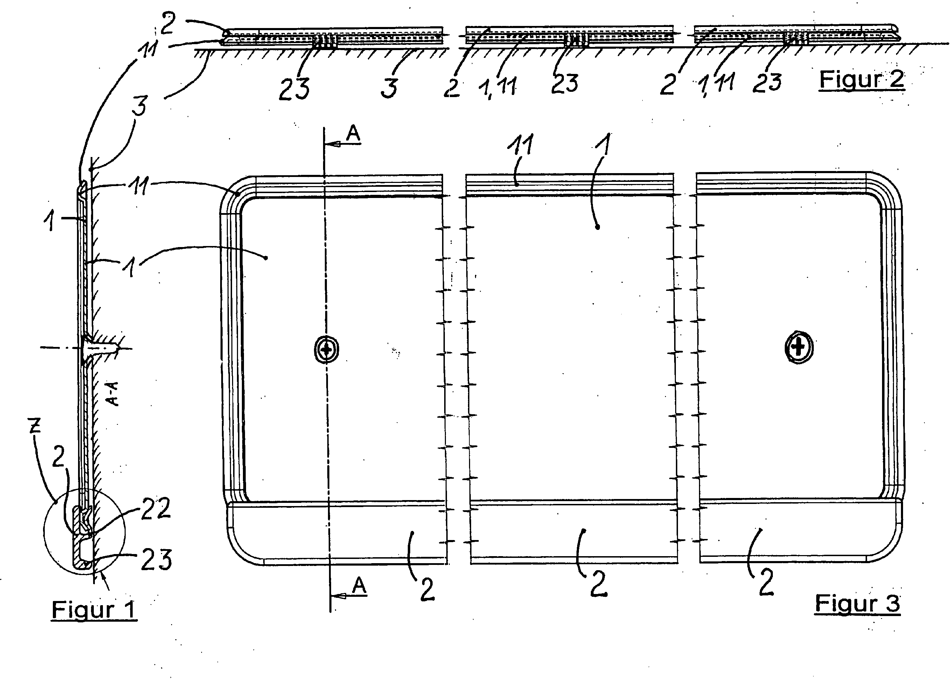

Als **Figur 1** ist an der linken Seite des ersten Blattes der Zeichhungen der Schnitt durch eine Blechplatte 1 gezeichnet, die in der Mitte mit einer Schraube in der Fläche 3 befestigt ist. An den beiden sichtbaren .Kanten der Blechplatte 1 ist ein Wulst 11 eingeprägt, auf den von der unteren Seite her die Leiste 2 aufgeschoben ist. Im Detail Z ist zu erkennen, dass die Leiste 2 zusammen mit der Halteklammer 22 eine - vereinfacht betrachtet - U-förmige Umschließung um den Wulst 11 der Blechplatte 1 bildet.

Deutlich sichtbar ist die Abstützung 23 an der Leiste 2, die auf der Fläche 3 aufliegt.

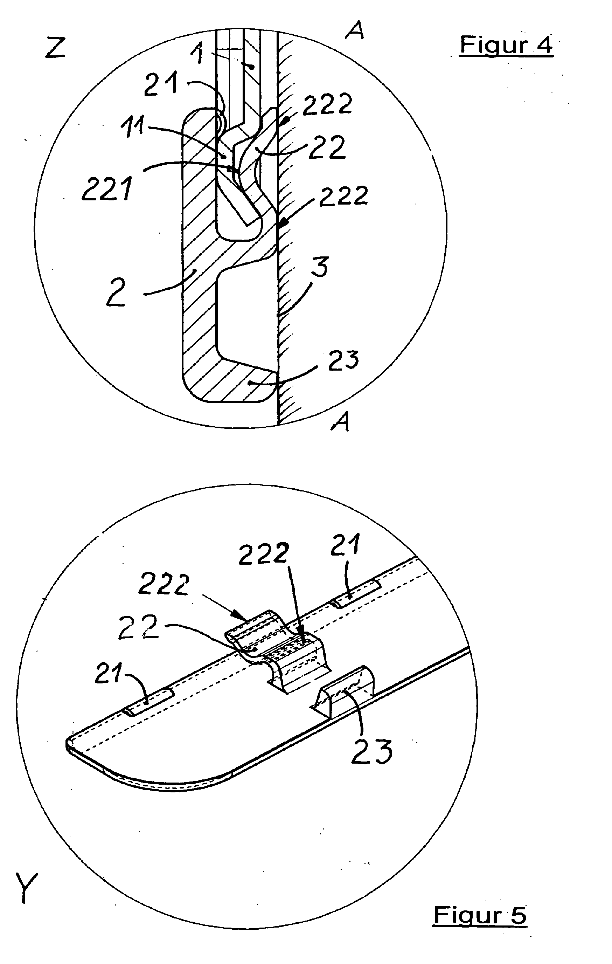

In Figur 1 ist das Detail Z markiert, das in Figur 4 vergrößert dargestellt ist.

Als **Figur 2** ist an der oberen Kante des ersten Blattes der Zeichnungen die Schmalseite einer Leiste 2 gezeigt, die auf den Wulst 11 einer Blechplatte 1 aufgeschoben ist, die auf der Fläche 3 montiert ist.

In Figur 2 sind nur die beiden Endabschnitte und ein Mittelabschnitt der Leiste 2 und der Blechplatte 1 gezeichnet, die übrigen Abschnitte sind der Übersichtlichkeit halber weggelassen.

Zu erkennen ist jedoch ganz klar, dass die Leiste 2 in diesem Ausführungsbeispiel nur mit relativ sehr kurzen Abstützungen 23 auf der Ebene 3 aufliegt. Die Blechplatte 1 ist nur mit ihrem Wulst 11 zu erkennen. Sie scheint über der Ebene 3 zu schweben, da die befestigenden Schrauben und das durch die Schrauben in die Blechplatte 1 eingeprägte, kegelförmige Distanzstück in dieser Perspektive durch die Abstützung 23 verdeckt wird.

In Figur 2 wird sehr schön deutlich, wie relativ wenig Material die Leiste 2 benötigt.

Als **Figur 3** ist auf dem ersten Blatt der Zeichnungen die Vorderansicht der Blechplatte 1 mit der darauf aufgeschobenen Leiste 2 bezeichnet. Ebenso wie in Figur 2 sind jeweils nur die beiden Randereiche und ein Teil des Mittelstücks dargestellt. In Deutschland sind jedoch Kfz-Kennzeichen in ihrer Proportion zumeist deutlich länger als die in Figur 3 dargestellten Teilstücke. Die zu einer entsprechenden Verlängerung erforderlichen weiteren Mittelstücke sind nicht dargestellt, da das Profil der Blechplatte 1 und der Leiste 2 in den nicht dargestellten Bereichen identisch zu den dargestellten Bereichen ist. Ins Auge fallen die beiden Befestigungsschrauben - jeweils in der Mitte der beiden Endbereiche - die die gesamte Blechplatte 1 tragen. Die Leiste 2 hängt an der Blechplatte 1 und stützt sich auf der Ebene 3 auf.

In Figur 3 ist zu erkennen, dass die Leiste 2 in der gleichen Richtung, in der auch die Blechplatte 1 ihre ,,Schauseite" zeigt, auf die Schriftzeichen, Zahlen oder andere Grafik aufgebracht werden, auch die Leiste 2 eine große Fläche bietet. Sie kann z. B. für Werbebotschaften genutzt werden.

In **Figur 4** ist das Detail Z aus der Figur 1 vergrößert gezeichnet. In dieser Figur sind die kennzeichnenden Merkmale der Erfindung besonders gut zu erkennen und nachzuvollziehen. Am oberen Rand der Leiste 2 ist im Profil zu erkennen, wie der Haltestreifen 21 an der Flanke des Wulstes 11 anliegt, die zum Inneren der Blechplatte 1 weist.

Der Wulst 11 hat in diesem Ausführungsbeispiel eine schmale, ebene Fläche, mit der er auf der Rückseite der Leiste 2 aufliegt. Auf der anderen Seite des Wulstes 11, in diesem Ausführungsbeispiel konkav gewölbt, liegt die Auflagefläche 222 der Halteklammer 22 in etwa auf.

Figur 4 verdeutlicht, dass die Konturen der Rückseite des Wulstes 11 und der Auflagefläche 222 nicht mit hoher Genauigkeit übereinstimmen müssen Es reicht aus, wenn sie in etwa komplementär zueinander sind und die Halteklammer 22 - so wie in diesem Beispiel - mit ihrer Auflagefläche 222 nur an zwei Stellen auf der Fläche 3 aufliegt.

In Figur 4 wird sehr gut deutlich, dass die Leiste 2 an ihrem unteren Ende mit der L- förmig angesetzten Abstützung 23 auf der Fläche 3 aufliegt.

In Figur 4 ist das Abnehmen und - invers dazu - das Aufsetzen der Leiste 2 vom und auf den Wulst 11 der Blechplatte 1 gut nachvollziehbar:

Wenn man sich vorstellt, dass die Blechplatte 1 von der Ebene 3 et- was abgehoben - in Figur 4 also nach links bewegt wird - und Vibrationen auf Blechplatte 1 und Leiste 2 einwirken, verschwenkt sich das Profil, der Leiste 2 um den Mittelpunkt des Wulstes 11 als Schwenkachse.

Bei einer Verschwenkung **im** Uhrzeigersinn muss sich die Halteklammer 22 sehr viel weiter von der Leiste 2 abspreizen als bei einer Verschwenkung **entgegen** dem Uhrzeigersinn. Die Federkraft der Halteklammer 22 sorgt also auch bei heftigen Vibrationen dafür, dass eine Verschwenkung - wenn sie denn überhaupt möglich ist - engegen dem Uhrzeigersinn gerichtet ist.

Bei extremen Vibrationen gleiten die Haltestreifen 21 über den Wulst 11 hinweg und der Wulst 11 gleitet in Gegenrichtung über die Hatteklammer 22 hinweg.

Das Risiko einer solchen Verschwenkung der Leiste 2 entgegen dem Urzeigersinn wird im montierten und durch das Anziehen der Befestigungsschrauben der Blechplatte gesicherten Zustand durch das Andrücken der Blechplatte 1 an die Ebene 3 kompensiert indem die Abstützung 23 eine gegenläufige Bewegung auslöst, deren Verschwenkachse ihr Berührungspunkt mit der Fläche 3 ist.

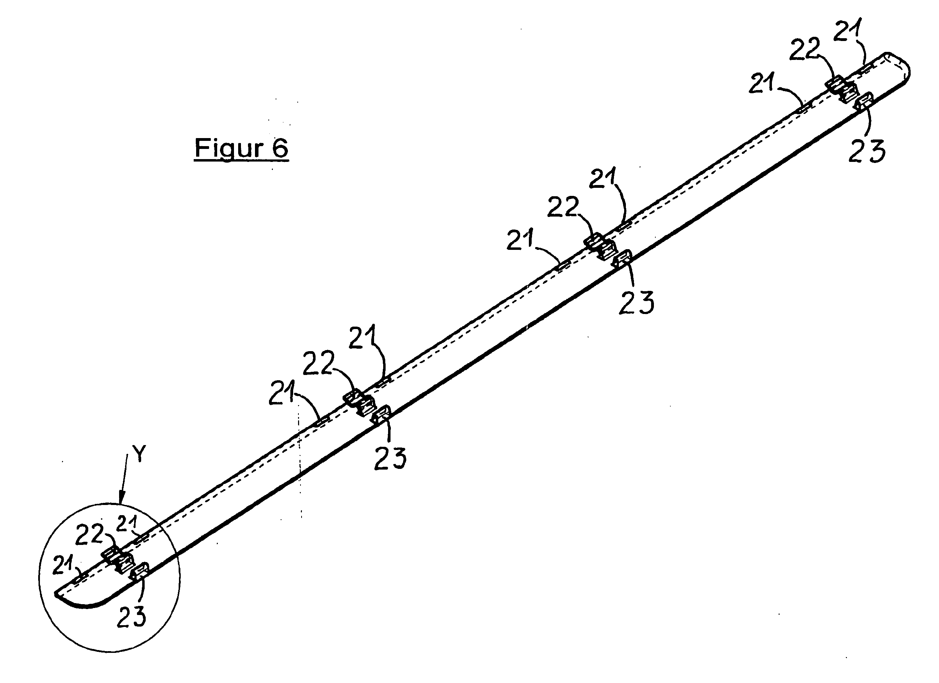

Bei. Betrachtung von Figur 4 wird deutlich, dass bei einer **konvex gewölbten** Montage-Fläche 3 - anders als bei der in Figur 4 gezeichneten **ebenen** Montage-Fläche 3 - die Abstützung 23 entsprechend länger werden muss, damit die Leiste 2 im montierten Zustand trotzdem noch mit der Blechplatte 1 fluchtet. Andernfalls verschwenkt sich die Leiste 2 gegen die Blechplatte 1 im Uhrzeigersinn, sodass schon bei geringer Öffnung der Halteklammer 22 die Leiste 2 abfällt. In **Figur 5** ist das vergrößerte Detail Y aus dem Schrägbild einer typischen Leiste gemäß Figur 6 gezeichnet.

Zu erkennen ist, dass im einfachsten Fall die Halteklammer 22 recht kurz sein können. Die Haltestreifen 21 müssen nicht direkt gegen-über zu einer Halteklammer 22 angeordnet werden, wodurch beim Guss der Halteklammer 22 die herauszuziehenden Kerne vereinfacht werden.

Die Abstützung 23 hingegen ist sehr viel einfacher zu gießen, wenn die Form für die Leiste 2 an den Schmalkanten ihrer Hauptfläche getrennt wird.

In **Figur 6** ist im Schrägbild eine Leiste 2 dargestellt, deren Proportionen typisch für ein deutsches Kfz-Kennzeichen sind. Dieses Kennzeichen ist so lang, dass die dazu passende Leiste 2 sinnvollerweise 4 Stück Halteklammern 22 auf ihrer gesamten Länge aufweist. Jede Halteklammer 22 wird von je zwei Haltestreifen 21 und je einer Abstützung 23 flankiert.

Deutlich wird, dass trotz einer dauerhaften Elastizität des Kunststoffes die Halteklammern 22 so tragfähig sein können, dass sie sich mit ihrem Profil nur über einen sehr geringen Teil der Gesamtlänge der Blechplatte 1 erstrecken müssen.

Einfach er nachvollziehbar ist, dass auch die Abstützung 23 nur sehr kurz zu sein hat und schon mit beinahe nur punktueller Auflagefläche eine ausreichende Übertragung der Reaktionskräfte der Halteklammer 22 sicherstellt.

Bei Betrachtung von Figur 6 ist jedoch auch vorstellbar, dass für einen sehr weichen Kunststoff die Verlängerung von Haltestreifen 21, Halteklammer 22 und Abstützung 23 notfalls über die gesamte Länger der Leiste ohne weiteres möglich ist.

### Bezugszeichenliste

- 1: Blechplatte, trägt Schriftzeichen und/oder Zahlen und/oder Graphiken
- 11: Wulst, nahe der Kante der Blechplatte 1 umlaufend
- 2: Leiste, umschließt eine Kante der Blechplatte 1
- 21: Haltestreifen 21, am Rand der Rückseite der Leiste 2
- 22: Halteklammern 22, auf der Rückseite der Leiste 2
- 221: Klemmfläche, vordere Seite der Halteklammer 22, komplemen- tär zum Profil des Wulstes 11
- 222: Auflagefläche, hintere Seite der Halteklammer 22, liegt auf der Fläche 3 auf
- 23: Abstützung, an dem den Haltestreifen 21 gegenüberliegenden Rand der Leiste 2, liegt auf Fläche 3 auf
- 3: Fläche auf der die Blechplatte 1 befestigt wird
- Y: Detail in Figur 5 aus Figur 6
- Z: Detail in Figur 4 aus Figur 1

## Patentansprüche

1. Schrifttafel mit Kantenschutz zur Montage auf einer Fläche 3, bestehend aus
- einer Blechplatte 1,
- auf deren Vorderseite Schriftzeichen und/oder Zahlen und/oder Graphiken aufgebracht oder eingeprägt sind und
- in die nahe zu ihrer Kante ein zumindest teilweise umlaufender Wulst 11 eingeprägt ist und
- einher Leiste 2, die die Kante der Blechplatte 1 zumindest teilweise umschließt, wobei
- auf der Rückseite der Leiste 2 mehrere, dauerhaft elastische Halte-klammem 22 angeformt sind,
- deren nach vorne weisende Klemmfläsche 221 komplementär zum Profil des Wulstes 11 geformt ist und darin oder darauf eingerastet ist und
- deren nach hinten weisende Auflagefläche 222 auf der Fläche 3 aufliegt und
- an den zu den Haltestreifen 21 gegenüberliegenden Rand der Leiste 2 mehrere Abstützungen 23 angeformt sind, die ebenfalls auf der Fläche 3 auflegen, **dadurch gekennzeichnet, dass**
- am Rand der Rückseite der Leiste 2 mehrere, rippenartige Halte-streifen 21 angeformt sind, die auf der zum Zentrum der Blechplatte 1 weisenden Flanke des Wulstes 11 aufliegen.

2. Schrifttafel nach dem vorhergehenden Anspruch 1, **dadurch gekennzeichnet, dass** die Haltestreifen 21 und/oder die Halteklammern 22 und/oder die Abstützungen 23 soweit verlängert sind, dass sie ineinander übergehen.

3. Schrifttafel nach einem der vorhergehenden Ansprüche, **dadurch gekennzeichnet, dass** die Abstützungen 23 verlängert und mit mehreren Sollbruchstellen oder Einschnürungen versehen ist, an denen ein Teil der Abstützung zwecks Anpassung an eine Wölbung oder Unregelmäßigkeit der Fläche 3abbrechbar oder abtrennbar ist.

4. schrifttafel nach einem der vorhergehenden Ansprüche, **dadurch gekennzeichnet, dass** an die Rückseite der Leiste 2 wenigstens zwei Lochstreifen mit jeweils einem Ende angeformt sind,
- die zwischen der Blechplatte 1 und der Fläche 3 verlaufen und
- die mit der Fläche 3 über jeweils wenigstens eine Schraube verbunden sind, die durch eine Bohrung in der Blechplatte 1 und durch ein Loch des lochstreifen hindurch bis in die Fläche 3 hinein verläuft.

5. Schrifttafel nach dem vorhergehenden Anspruch 4, **dadurch gekennzeichnet, dass** die Lochstreifen etwa rechtwinklig zur Leiste 2 ausgerichtet sind.

6. Schrifitafel nach dem vorhergehenden Anspruch 4, **dadurch gekennzeichnet, dass** jeder Lochstreifen
- aus dauerhaft elastischem Material besteht und
- vor seiner Montage etwa parallel zur Leiste 2 verläuft und
- bei der Montage soweit biegbar ist, dass ein Loch des Lochstreifen eine Bohrung in der Blechplatte 1 erreicht.

7. Schrifttafel nach dem vorhergehenden Anspruch 4, **dadurch gekennzeichnet, dass** jeder Lochstreifen
- über wenigstens eine Sollbruchstelle mit der Leiste 2 verbunden ist und
- vor der Montage der Leiste 2 abtrennbar ist und
- in eine von mehreren Aufnahmen auf der Rückseite der Leiste 2 einsteckbar ist.

8. Schrifttafel nach dem vorhergehenden Anspruch 7, **dadurch gekennzeichnet, dass**
jede Aufnähme ein etwa C-förmiger Bügel auf der Rückseite der Leiste 2 ist, der mit der Leiste 2 eine Öffnung bildet, durch die ein Lochstreifen hindurch steckbar ist und darin durch einen Anschlag und/oder eine Rastnase fixiert wird.

9. Schrifttafel nach einem der vorhergehenden Ansprüche 4 bis 8,
**dadurch gekennzeichnet, dass** der Lochstreifen bis zu der Kante der Blechplatte 1 verlängert ist, die der Leiste 2 gegenüber liegt und an diesem Ende ebenfalls mit wenigstens je einem Haltestreifen 21, einer Halteklammer 22 und einer Abstützung 23 versehen ist.

10. Schrifttafel nach einem der vorhergehenden Ansprüche, dadurch gekenntzeichnet dass die Blechplatte 1 im Wulst 11 wenigstens eine Bohrung aufweist, durch die je ein Zapfen verläuft, der auf der Rückseite der Leiste 2 gegenüber von einer Halteklammer 22 gangeformit ist und in jeweils eine Aussparung in der Halteklammer 22 einrastet, wenn diese auf den Zapfen gedrückt wird.

11. Verfahren zur Montage einer Schrifftafel nach dem vorhergehenden Anspruch 10 auf einer ebenen Fläche 3, wobei
- vor der Montage alle Zapfen abgetrennt werden und
- bei der Verbindung der Leiste 2 mit der Blechplatte 1
- alle Halteklammern 22 mit einer Aussparung für einen Zapfen unbenutzt bleiben und
- die Leiste 2 nur mit den Halteklammern 22 ohne Aussparungen an der Blechplatte 1 befestigt wird.

12. Verfahren zur Montage einer Schrifttafel nach dem vorhergehenden Anspruch 10auf einer unebenen Fläche 3, wobei
- vor der Montage in den Wulst 11 der Blechplatte 1 Bohrungen eingebracht werden, die zu den Zapfen korrespondieren und
- bei der Verbindung der Leiste 2 mit der Blechplatte 1
- die Leiste 2 auf den Wulst 11 aufgeschoben wird, bis die Zapfen in die Bohrungen einrasten und dann
- alle Halteklammern 22 mit ihrer Aussparung auf den genenüberliegenden Zapfen gedrückt-werden, bis sie einrasten.

## Claims

1. Writing tablet with edge protection for mounting on a surface 3, comprising
- a sheet-metal panel 1,
- on the front side of which characters and/or numerals and/or graphics are applied or embossed and
- in the vicinity of its edge, an at least partly surrounding bead 11 is embossed and
- a rail 2, which at least partly encloses the edge of the sheet-metal panel 1,
- a plurality of permanently elastic retaining clips 22 being integrally formed on the reverse side of the rail 2,
- the front-facing clip surface 221 thereof being formed so as to be complementary to the profile of the bead 11, and engaging therein or thereon, and
- the backward facing contact surface 222 thereof bearing on the surface 3, and
- on that edge of rail 2 that is opposite the retaining strips 21, a plurality of supports 23 are integrally formed, which also bear against the surface 3, **characterised in that**
- on the edge of rail 2, a plurality of rib-like retaining strips 21 are integrally formed, which bear against that flank of the bead 11 that faces the centre of the sheet-metal panel 1.

2. Writing tablet according to the preceding claim 1, **characterised in that** the retaining strips 21 and/or the retaining clips 22 and/or the supports 23 are extended such that they merge into one another.

3. Writing tablet according to one of the preceding claims, **characterised in that** the supports 23 are extended and provided with a plurality of predetermined rupture points or constrictions at which a portion of the support can be broken off or separated off in order to adapt to a concavity or irregularity of the surface 3.

4. Writing tablet according to one of the preceding claims, **characterised in that** at least two perforated strips are integrally formed at one end in each case on the reverse side of the rail 2,
- which strips extend between the sheet-metal panel 1 and the surface 3 and
- which are connected to the surface 3 via at least one screw in each case, which runs through a bore in the sheet-metal panel 1 and through a hole of the perforated strip into the surface 3.

5. Writing tablet according to the preceding claim 4, **characterised in that** the perforated strips are oriented approximately perpendicular to the rail 2.

6. Writing tablet according to the preceding claim 4, **characterised in that** each perforated strip
- consists of permanently elastic material and
- before mounting extends approximately parallel to the rail 2 and
- during mounting can be bent to the extent that a hole of the perforated strip reaches a bore in the sheet-metal panel 1.

7. Writing tablet according to the preceding claim 4, **characterised in that** each perforated strip
- is connected to the rail 2 via at least one predetermined rupture point, and
- can be separated off before mounting of the rail 2 and
- can be inserted into one of a plurality of receptacles on the reverse side of the rail 2.

8. Writing tablet according to the preceding claim 7, **characterised in that**
each receptacle is an approximately C-shaped bracket on the reverse side of the rail 2, which, together with rail 2, forms an opening, through which a perforated strip can be inserted and fixed therein by means of a stop and/or a detent lug.

9. Writing tablet according to one of the preceding claims 4 to 8, **characterised in that** the perforated strip is extended as far as the edge of the sheet-metal panel 1, which is located opposite the rail 2 and, on this end, is also provided with at least one retaining strip 21, a retaining clip 22 and a support 23.

10. Writing tablet according to one of the preceding claims, **characterised in that** the sheet-metal panel 1 has, in the bead 11, at least one bore, through which one pin in each case runs, which is integrally formed on the reverse side of the rail 2 opposite a retaining clip 22, and, in each case, engages in a recess in the retaining clip 22 when the latter is pressed onto the pin.

11. Method for mounting a writing tablet according to the preceding claim 10 on an even surface 3, wherein
- all pins are separated off before assembly and
- during connection of the rail 2 to the sheet-metal panel 1
- all retaining clips 22 with a recess for a pin remain unused and
- the rail 2 is fastened on the sheet-metal panel 1 only by means of the retaining clips 22 without recesses.

12. Method for mounting a writing tablet according to the preceding claim 10 on an uneven surface 3, wherein
- before mounting in the bead 11 of the sheet-metal panel 1, bores are introduced which correspond to the pins and
- during connection of the rail 2 to the sheet-metal panel 1
- the rail 2 is pushed onto the bead 11 until the pins engage in the bores and then
- all retaining clips 22 are pressed with their recess onto the opposite pins until they engage.

## Revendications

1. Plaque portant une inscription, avec protection des bords, destinée à être montée sur une surface 3, consistant en
• une plaque de tôle 1,
• sur la face de laquelle des caractères d'écriture et/ou des chiffres et/ou des graphiques sont inscrits ou estampés,
• un bourrelet 11 étant estampé, à proximité de votre bord, sur une partie au moins de la périphérie,
• une baguette 2, qui enserre au moins en partie le bord de la plaque de tôle, sachant que
• plusieurs colliers d'arrêt, d'élasticité durable, étant formés sur la face arrière de la baguette 2,
• dont la surface de serrage 221 tournée vers l'avant est formée de façon à compléter le profil du bourrelet 11 en étant encrantée dedans ou dessus,
• dont la surface de support 222 tournée vers l'arrière repose sur la surface 3,
• plusieurs supports 23 étant formés sur le bord, situé vis-à-vis de la bande d'arrêt 21, de la baguette 2, lesquels reposent également sur la surface 3, **caractérisée par le fait que**
• plusieurs bandes d'arrêt 21 prenant la forme de nervures sont formées sur le bord de la face arrière, lesquelles reposent sur le flanc du bourrelet 11 tourné vers le centre de la plaque de tôle 1.

2. Plaque portant une inscription selon la revendication précédente 1, **caractérisée par le fait que** la bande d'arrêt 21 et/ou les colliers d'arrêt 22 et/ou les supports 23 sont prolongés de façon à ce qu'ils rentrent les uns dans les autres.

3. Plaque portant une inscription selon une des revendications précédentes, **caractérisée par le fait que** les supports 23 sont prolongés et sont pourvus de plusieurs points de cassure ou de contraction de consigne, sur lesquels une partie du support peut être cassée ou séparée en vue de s'adaptater à une partie courbée ou à une irrégularité de la surface 3.

4. Plaque portant une inscription selon une des revendications précédentes, **caractérisée par le fait qu'**au moins deux bandes perforées ayant chacune une extrémité sont formées sur la face arrière de la baguette 2,
• qui courent entre la plaque de tôle 1 et la surface 3 et
• qui sont chacune reliées à la surface 3 par l'intermédiaire d'au moins une vis, qui parvient jusqu'à la surface 3 en passant à travers une perforation dans la plaque de tôle 1 et à travers un trou de la bande perforée.

5. Plaque portant une inscription selon la revendication précédente 4, **caractérisée par le fait que** la bande perforée est orientée à peu près à angle droit par rapport à la baguette 2.

6. Plaque portant une inscription selon la revendication précédente 4, **caractérisée par le fait que** chaque bande perforée
• est constituée d'un matériau à élasticité permanente et
• qui court, avant son montage, à peu près parallèlement à la baguette 2 et
• qui peut être pliée, lors du montage, jusqu'à ce qu'un trou de la bande perforée atteigne une perforation dans la plaque de tôle 1.

7. Plaque portant une inscription selon la revendication précédente 4, **caractérisée par le fait que** chaque bande perforée
• est reliée à la baguette 2 par l'intermédiaire d'au moins un point de cassure de consigne et
• peut être séparée avant le montage de la baguette 2 et
• peut être insérée dans une ou plusieurs réceptions sur la face arrière de la baguette 2.

8. Plaque portant une inscription selon la revendication précédente 7, **caractérisée par le fait que**
chaque réception est un étrier ayant à peu près la forme d'un C,
qui forme, avec la baguette 2, une ouverture à travers laquelle une bande perforée peut être insérée et être fixée à l'intérieur à travers une butée et/ou un tenon d'encliquetage.

9. Plaque portant une inscription selon une des revendications précédentes 4 à 8, **caractérisée par le fait que** la bande perforée est prolongée jusqu'au bord de la plaque de tôle 1, qui est disposée vis-à-vis de la baguette 2 et qui est également pourvue à cette extrémité d'au moins une bande d'arrêt 21, d'un collier d'arrêt 22 et d'un support 23.

10. Plaque portant une inscription selon une des revendications précédentes, **caractérisée par le fait que** la plaque de tôle 1 dans le bourrelet 11 présente au moins une perforation à travers chacune desquelles passe un pivot qui est formé sur la face arrière de la baguette 2 en face d'un collier d'arrêt 22, et qui s'encrante à chaque fois dans une réservation dans le collier d'arrêt 22 lorsque celle-ci est pressée sur le pivot.

11. Procédé destiné au montage d'une plaque selon la revendication précédente 10 sur une surface plane 3, sachant
• que tous les pivots sont séparés avant le montage et que
• lors de la liaison de la baguette 2 avec la plaque de tôle 1
• tous les colliers d'arrêt 22 ayant une réservation pour un pivot restent inutilisés et
• que la baguette 2 n'est fixée sur la plaque de tôle qu'avec les colliers d'arrêt 22 sans réservations

12. Procédé destiné au montage d'une plaque selon la revendication précédente 10 sur une surface non plane 3, sachant
• qu'avant le montage, des perforations sont disposées dans le bourrelet 11 de la plaque de tôle 1, qui correspondent aux pivots,
• et que lors de la liaison de la baguette 2 avec la plaque de tôle 1
• la baguette 2 est poussée sur le bourrelet 11 jusqu'à ce que les pivots s'encrantent dans les perforations et qu'ensuite
• tous les colliers d'arrêt avec leur réservation soient pressées sur les pivots situés en face jusqu'à ce qu'ils s'encrantent.
